# EUROPÄISCHE PATENTANMELDUNG

(11) **EP 2 660 560 A1**
(43) Veröffentlichungstag der Anmeldung: **06.11.2013**
(21) Anmeldenummer: 12166444.5
(22) Anmeldetag: 02.05.2012
(51) Int. Cl.: G01C 11/02

(54) **Verfahren zur Ermittlung der Oberflächengeometrie eines Tunnelabschnitts**

(71) Anmelder: DIBIT Messtechnik GmbH, 6020 Innsbruck (AT)
(72) Erfinder: Kontrus, Heiner, 6065 Thaur (AT); Glatzl, Robert, 5550 Radstadt (AT)
(74) Vertreter: Schwarz & Partner

(57) **Zusammenfassung**

Verfahren zur Ermittlung der Oberflächengeometrie einer Tunneloberfläche (3), dadurch gekennzeichnet, dass a) zunächst im zu ermittelnden Bereich der Tunneloberfläche (3) wenigstens drei Passpunkte (6) angebracht werden, b) anschließend aus einer ersten Kameraposition (1) zumindest eine Aufnahme (10.1, 11.1, 12.1, 13.1, 14.1) von zumindest einem Abschnitt der Wölbung gemacht wird, wobei die wenigstens drei Passpunkte (6) von der wenigstens einen Aufnahmen (10.1, 11.1, 12.1, 13.1, 14.1) erfasst werden, c) danach aus einer zweiten Kameraposition (2), die von der ersten Kameraposition (1) beabstandet ist, zumindest eine Aufnahme (10.2, 11.2, 12.2, 13.2, 14.2) von dem zumindest einen Abschnitt der Wölbung gemacht wird, von dem bereits aus der ersten Kameraposition eine Aufnahme (10.1, 11.1, 12.1, 13.1, 14.1) gemacht wurde, wobei die wenigstens drei Passpunkte (6) von der wenigstens einen Aufnahme (10.2, 11.2, 12.2, 13.2, 14.2) aus der zweiten Kameraposition (2) erfasst werden, d) abschließend eine photogrammetrische Auswertung der Aufnahmen (10.1, 11.1, 12.1, 13.1, 14.1; 10.2, 11.2, 12.2, 13.2, 14.2) vorgenommen und die Oberflächengeometrie bestimmt wird, wobei nach der Anbringung der Passpunkte (6) - aber vor der Auswertung - die Passpunkte (6) geodätisch vermessen werden.

## Beschreibung

Die Erfindung betrifft ein Verfahren zur Ermittlung der Geometrie einer Tunneloberfläche.

Beim Tunnelbau ist eine genaue Vermessung des Tunnelausbruchs von besonderer Bedeutung. In der Praxis wird der Rohausbruch nach jedem Abschlag vermessen, damit der Fortschritt exakt bestimmt und der nächste Abschlag genau festgelegt werden kann.

Seit der Mitte der 1990er Jahre sind Tunnelscanner zur dreidimensionalen geometrischen und visuellen Rekonstruktion von Tunneloberflächen im Einsatz. Die ersten Tunnelscanner wurden basierend auf der Idee der Photogrammetrie entwickelt. Ein aus dem Stand der Technik bekannter Tunnelscanner wendet dabei ein stereoskopisches Verfahren an. Hierfür sind zwei Kameras vorgesehen, welche zueinander in bekannter Orientierung (Relativorientierung) stehen, und zum Zeitpunkt einer Messung gleichzeitig ausgelöst werden. Zur Ermittlung der genauen räumlichen Orientierung der Tunneloberfläche sind zusätzlich am Tunnelscanner Markierungen vorgesehen, die der Vermessung mit einem Theodoliten dienen.

Andere Tunnelscanner vermessen die Tunneloberfläche rasterweise mittels Distanzmessungen. Der Tunnelscanner weist dabei in der Regel eine Laserlichtquelle auf, die nach einem vorgegebenen Raster die Tunneloberfläche ausleuchtet. Das reflektierte Laserlicht wird mittels eines Empfängers gemessen. Aus der Dauer, die der Lichtstrahl für die Reflexion benötigt, kann auf die Oberflächenstruktur des Tunnels geschlossen werden. Zur Ermittlung der genauen räumlichen Orientierung der Tunneloberfläche sind zusätzlich am Tunnelscanner Markierungen vorgesehen, die der Vermessung mit einem Theodoliten dienen.

Auch Hybride aus den zuvor genannten Verfahren sind bekannt. Allen diesen Systemen gemein ist, dass bei der Auswertung von Fotodaten die innere und äußere Orientierung der Kameras bekannt sein muss. Diese ist entweder bei der Aufnahme bekannt oder wird im Post-Processing aus fest mit dem Messsystem verbundenen Passpunkten (z.B. der Kamerarahmen) und einer bekannten Relativ-Orientierung (Kalibration) berechnet.

Die aus dem Stand der Technik bekannten Verfahren zur Bestimmung der Oberflächengeometrie und Struktur des Tunnels sind aufwändig. Vor allem aber sind die Anschaffungskosten für solche Tunnelscanner hoch.

Aufgabe der vorliegenden Erfindung ist es daher, ein Verfahren der eingangs genannten Art bereit zu stellen, das mit weniger Aufwand und kostengünstiger durchgeführt werden kann. Insbesondere soll auch der aparative Aufwand vor Ort, d.h. bei der Tunnelvermessung, gering gehalten werden.

Gelöst wird diese Aufgabe durch ein Verfahren zur Ermittlung der Geometrie einer Tunneloberfläche, welches dadurch gekennzeichnet ist, dass
a) zunächst im zu ermittelnden Bereich der Tunneloberfläche wenigstens drei Passpunkte angebracht werden,
b) anschließend aus einer ersten Kameraposition zumindest eine Aufnahme von zumindest einem Abschnitt der Wölbung gemacht wird, wobei die wenigstens drei Passpunkte von der wenigstens einen Aufnahmen erfasst werden,
c) danach aus einer zweiten Kameraposition, die von der ersten Kameraposition beabstandet ist, zumindest eine Aufnahme von dem zumindest einen Abschnitt der Wölbung gemacht wird, von dem bereits aus der ersten Kameraposition eine Aufnahme gemacht wurde, wobei die wenigstens drei Passpunkte von der wenigstens einen Aufnahme aus der zweiten Kameraposition erfasst werden,
d) abschließend - vorzugsweise mittels Bündelblockausgleich - eine photogrammetrische Auswertung der Aufnahmen vorgenommen und die Oberflächengeometrie bestimmt wird, wobei nach der Anbringung der Passpunkte - aber vor der Auswertung - die Passpunkte geodätisch vermessen werden.

Beim gegenständlichen Verfahren handelt es sich um die Anwendung eines monoskopischen Aufnahmesystems, welches den aufzunehmenden Bereich der Tunneloberfläche von zwei unterschiedlichen Standpunkten aus aufnimmt. Es existiert nur eine Kamera, welche zum Zweck der Messung eines bestimmten Bereiches (ROI, Region of Interest) von unterschiedlichen Positionen zu zwei kurz aufeinanderfolgenden Zeitpunkten ausgelöst werden. Das Messsystem wird dabei also auf eine Kamera reduziert, um insbesondere im Tunnelneubau ein leichtes und flexibel einsetzbares Aufnahmeinstrument zur Verfügung zu haben, ohne schwerfällige Zusatzausrüstung wie Aufnahme-Computer, Stromversorgung, oder evtl. Beleuchtungsmittel. Als Aufnahmeinstrument kann eine handelsübliche Kamera, beispielsweise eine herkömmliche Spiegelreflexkamera, dienen. Die äußere Orientierung muss dabei weder zum Zeitpunkt der Aufnahme bekannt sein, noch wird sie über Relativorientierung zu einem Kamerarahmen berechnet werden, da dieser vollständig fehlt. Die für die Stereo-Rekonstruktion eines homogenen 3D-Modells der gesamten Szene (z.B. Tunnelausbruch für einen Abschlag) erforderliche Relativorientierung für jede einzelne Aufnahme aus den beiden Kamerapositionen wird in einem Bündelblockausgleich berechnet. Die Orientierung des Gesamtmodells in das übergeordnete Referenzsystem (Georeferenzierung) erfolgt dabei durch Markierungen - sogenannte Passpunkte. Bei Referenz- oder Passpunkten handelt es sich um signalisierte Punkte, für welche ihre Koordinaten im übergeordneten Koordinatensystem (Projektkoordinaten) bekannt sein müssen. Die o.g. Markierungen werden während der Messung im Aufnahmebereich platziert, so dass die Bestimmung ihrer Projektkoordinaten durch ein externes Positioniersystem automatisch oder manuell durchgeführt wird.

Bevorzugt ist vorgesehen, dass aus der ersten Kameraposition jeweils mindestens eine Aufnahme von zumindest zwei Abschnitten der Wölbung gemacht werden, wobei die Aufnahmen teilweise überlappen, und dass aus der zweiten Kameraposition jeweils mindestens eine Aufnahme von zumindest zwei Abschnitten der Wölbung gemacht werden, von denen bereits aus der ersten Kameraposition Aufnahmen gemacht wurden, wobei die Aufnahmen aus der zweiten Kameraposition teilweise überlappen.

Für das Verfahren wesentlich ist, dass alle zumindest drei Passpunkte von zumindest einer der Aufnahmen aus jeder der beiden Kamerapositionen erfasst werden und dass die Abschnitte der Wölbung von zwei Kamerapositionen aufgenommen werden.

Bevorzugt werden von jeder Kamerapositionen zumindest zwei Aufnahmen von unterschiedlichen Abschnitten gemacht, wobei die Aufnahmen von jeder Kameraposition überlappen und wobei die selben Abschnitte von beiden Kamerapositionen aufgenommen werden.

Bevorzugt ist vorgesehen, dass aus der ersten Kameraposition und aus der zweiten Kameraposition jeweils mindestens eine Aufnahme von zumindest vier, vorzugsweise fünf, Abschnitten der Wölbung gemacht werden. Besonders bevorzugt werden von jedem Abschnitt vier bis fünf Aufnahmen gemacht.

Bei einer Tunnelvermessung wird die Kameraposition bevorzugt unter dem höchsten Punkt der Wölbung des Tunnels (First) gewählt. Weiters ist vorgesehen, dass die zweite Kameraposition in Tunnelrichtung gegenüber der ersten Position versetzt gewählt wird. Bei symmetrischer Ausgestaltung des Tunnels sind die erste Kameraposition und auch die zweite Kameraposition entlang der Tunnelachse gelegen. Bevorzugt ist vorgesehen, dass die erste Kameraposition im Wesentlichen entlang der Firstlinie der Wölbung gewählt wird.

In der Praxis wird der Tunnelausbruch nach jedem Abschlag ermittelt. Pro Abschlag werden meist ein bis zwei Meter Fels entfernt. Daraus ergibt sich, dass der Abstand der Kamerapositionen damit auch bevorzugt etwa ein bis zwei Meter beträgt. Ziel ist es also, den Tunnelausbruch des Abschlags bis zur Ortsbrust zu ermitteln.

Daher ist bevorzugt vorgesehen, dass die Aufnahmen aus der ersten Kameraposition entlang der Tunnellaibung aufgenommen werden. Entlang der Tunnellaibung bedeutet, dass die Aufnahmen von der Kameraposition entlang eines Bogens gewählt werden, wobei der Bogen durch die Vertikale durch die Kameraposition verläuft.

Insgesamt wird bevorzugt der gesamte neue Tunnelausbruch vermessen, woraus sich im Prinzip eine Art Zylinder zu vermessen ergibt. Da die Bodenfläche im Wesentlichen horizontal verläuft, ist nur der Bogen - und damit ein Segment von ca. 180° - zu vermessen. Dabei hat es sich als vorteilhaft erwiesen, wenn der zu vermessender Bereich in vier, vorzugsweise fünf, Aufnahmen pro Kameraposition und dementsprechend vielen Abschnitten aufgenommen wird.

Bevorzugt wird das Aufnahmegerät auf einem Stativ positioniert. Dieses kann ein herkömmliches Kamerastativ sein. Die Aufnahmen werden bevorzugt entlang einer Drehachse aufgenommen werden, wobei die Überlappung pro Bild zumindest 5° beträgt. Je nach Öffnungswinkel der Kamera ist der Überlappungsbereich natürlich unterschiedlich. In einer bevorzugten Ausführungsvariante wird ein Normalobjektiv oder ein Weitwinkelobjektiv verwendet. Der Öffnungswinkel beträgt bevorzugt zwischen 40° und 90°, sodass die Überlappung dann zumindest 5° beträgt. Bevorzugt beträgt die Überlappung der Abschnitte bzw. Aufnahmen zumindest 15°.

Bevorzugt ist vorgesehen, dass insgesamt zumindest vier Passpunkte für den gesamten Aufnahmebereich vorgesehen sind, wobei die Passpunkte in mindestens einer Aufnahme pro Kameraposition erfasst werden. Das kann beispielsweise bedeuten, dass mehrere (oder alle) Passpunkte in nur einer Aufnahme pro Kameraposition erfasst werden und andere Aufnahmen aus der selben Kameraposition keinen oder nur wenige Passpunkte erfassen.

Besonders bevorzugt sind vier Passpunkte vorgesehen. Bevorzugt werden fünf Aufnahmen pro Kameraposition aufgenommen werden.

Die Positionen der Passpunkte werden mittels geodäsischer Verfahren bestimmt. Beispielsweise kann hierfür eine Totalstation zur Messung von Distanz, Horizontalrichtungen und Zenit- oder Vertikalwinkel eingesetzt werden.

Die photogrammetrische Auswertung der Oberflächengeometrie erfolgt mittels an sich bekannter Methoden. Dabei ist es dem Fachmann bekannt, welche Informationen er für die Auswertung sammeln muss. Wichtig sind die Passpunkte, deren Lage genau vermessen wurde. Weiters kommen zusätzliche Informationen in Frage, wie die Blickrichtung der Kamera, die Brennweite des Objektivs, Linsenverzerrungen der Kamera und andere Parameter, wobei der Fachmann aus den bekannten Auswerteverfahren und den geeigneten Parametern ohne erfinderisches Zutun die geeigneten auswählen kann.

Anhand nachfolgender Figurenbeschreibung wird unter Zuhilfenahme der Figuren die Erfindung sowie Vorteile und Details der Erfindung erläutert.
- Fig. 1: zeigt die schematisch die Kamerapositionen für ein erfindungsgemäßes Verfahren in einem Tunnel.
- Fig. 2a, 2b: zeigt die Abschnitte einer Tunnelwölbung, die aufgenommen werden.
- Fig. 3: zeigt ein 3D-Modell einer Tunneloberfläche nach Aufnahme und Auswertung mittels der Auswertung gemäß dem erfindungsgemäßen Verfahren.

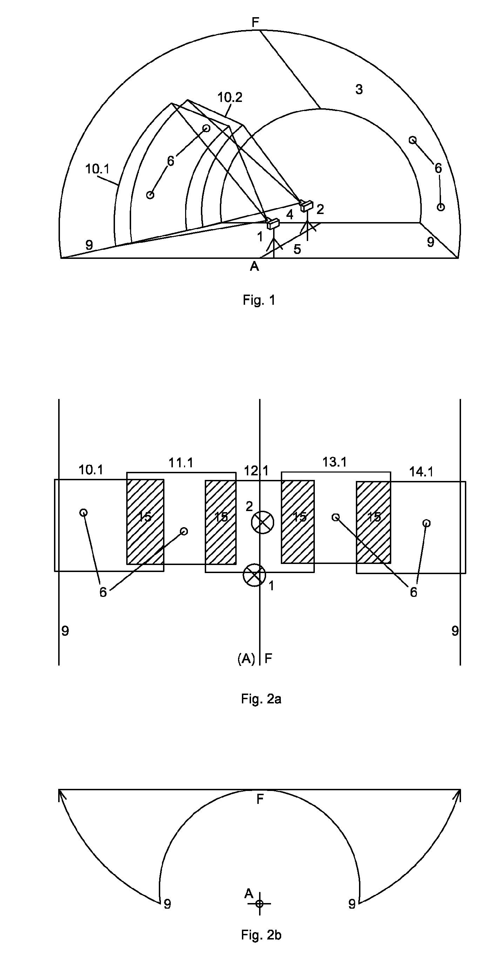

In Fig. 1 sind die erste Kameraposition 1 und die zweite Kameraposition 2 für ein erfindungsgemäßes Verfahren gezeigt. Die erste Kameraposition 1 ist etwa unterhalb der Firstlinie F der Wölbung bzw. aufgrund der Symmetrie des Tunnels etwa entlang der Tunnelachse A vorgesehen. Bei der gewölbten Oberfläche handelt es sich um eine Tunneloberfläche 3, die als Roh- bzw. Tunnelausbruch vorliegt und dementsprechend eine strukturierte Oberflächengeometrie aufweist. Beim gezeigten Aufnahmegerät 4 handelt es sich um eine handelsübliche Spiegelreflexkamera, die auf einem handelsüblichen Stativ 5 angebracht ist. An der Tunneloberfläche 3 sind insgesamt vier Passpunkte 6 angebracht, die z. B. mittels Klebefolien auf die Tunneloberfläche 3 aufgebracht werden. Die Passpunkte 6 werden mittels eines (nicht gezeigten) Theodoliten vermessen. Aus der ersten Kameraposition 1 werden mittels des Aufnahmegeräts 4 mehrere Aufnahmen 10.1, 11.1, 12.1, 13.1, 14.1 von der Wölbung gemacht, und zwar von fünf Abschnitten, die in Fig. 2 näher erläutert sind. In Fig. 1 ist dargestellt, dass eine Aufnahme 10.1 von einem ersten Abschnitt von der Kameraposition 1 aus gemacht wird. Zur Unterscheidung, ob die Aufnahmen 10, 11, 12, 13, 14 der Abschnitte aus Kameraposition 1 oder Kameraposition 2 aufgenommen worden sind, werden die Aufnahmen mit 1 für Kameraposition 1 (z.B. Aufnahme 10.1) und mit 2 für Kameraposition 2 (z.B. Aufnahme 10.2) indiziert.

Nachdem die Aufnahmen 10.1, 11.1, 12.1, 13.1, 14.1 aus der ersten Kameraposition 1 aufgenommen wurden, wird die Kamera in die zweite Kameraposition 2 gebracht. Auch die zweite Kameraposition 2 ist unter der Firstlinie F bzw. auf der Tunnelachse A gelegen. Mit dem Aufnahmegerät 4 werden jetzt ebenfalls von den selben Abschnitte Aufnahmen 10.2, 11.2, 12.2, 13.2, 14.2 gemacht, wobei in Fig. 2 nur der die Aufnahme 10.2 des ersten Abschnitts gezeigt ist, der von der ersten Kameraposition 1 und von der zweiten Kameraposition 2 aufgenommen wird.

Der Abstand d zwischen den beiden Kamerapositionen 1, 2 kann an sich gewählt werden, liegt aber bevorzugt bei der Distanz d, die dem Abschlag bei einem Tunnelausbruch entspricht. Im gezeigten Beispiel ist d etwa 1 bis 2 m.

In Fig. 2a ist eine Abwicklung eines Tunnelgewölbes gemäß Fig. 2b)gezeigt (Ansicht von oben). Erkennbar ist die Tunnelachse A, die mit der Firstlinie F zusammenfällt. Die seitlichen Begrenzungen 9 des Tunnelgewölbes sind ebenfalls eingezeichnet. Die erste Kameraposition 1 ist (ohne Aufnahmegerät 4) dargestellt und die Abschnitte, von denen Aufnahmen 10, 11, 12, 13, 14 gemacht wurden, sind als Flächen dargestellt, die vom Aufnahmegerät 4 aufgenommen werden. Die Überlappungsbereiche 15 sind schraffiert dargestellt. Die vier Passpunkte 6 sind ebenfalls eingezeichnet. Die Aufnahmen (insgesamt fünf) 10.1, 11.1, 12.1, 13.1, 14.1 aus der ersten Kameraposition 1 werden entlang der Tunnellaibung aufgenommen. Anschließend wird das Aufnahmegerät 4 auf die Kameraposition 2 versetzt und es werden wiederum insgesamt fünf Aufnahmen 10.2, 11.2, 12.2, 13.2, 14.2 aus der zweiten Kameraposition 2 aufgenommen, und zwar von den selben Abschnitten wie aus der ersten Kameraposition 1. Die Aufnahmen 10.1, 11.1, 12.1, 13.1, 14.1 der ersten Kameraposition 1 überlappen untereinander jeweils. Auch die Aufnahmen 10.2, 11.2, 12.2, 13.2, 14.2 der zweiten Kameraposition 2 überlappen untereinander jeweils.

Der Aufnahmevorgang sieht vor, dass der Benutzer einen Standpunkt (erste Kameraposition 1) in der Mitte des Tunnels einnimmt und eine Bildserie (Serie 1 bestehend aus 5 Einzelbildern) von der Tunnellaibung aufnimmt. Anschließend wird der Standpunkt (zweite Kameraposition 2) entlang der Tunnelachse A verschoben und eine weitere Bildserie (Serie 2 ebenfalls bestehend aus 5 Einzelbildern) aufgenommen.

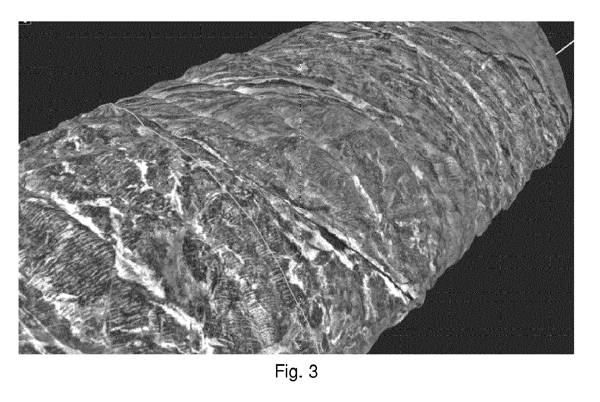

Abschließend werden die Aufnahmen und die Daten aus der geodätischen Vermessung einer photogrammetrischen Auswertung unterzogen. Das Resultat eines Beispiels ist in Fig. 3 dargestellt. Sichtbar gemacht wurde die Außenkontur des Tunnels.

Bevorzugt ist jeder der Passpunkte 6 auf jeweils einem Bild jeder Kameraposition sichtbar und eindeutig identifizierbar. Die anschließende 3D-Rekonstruktion erfolgt auf den durch Bündelblockausgleich orientierten Bildern mit den "besten" Stereokonfigurationen. Als Ergebnis erhält man ein 3D-Modell der Tunneloberfläche in Echtfarben, auf dem alle weiteren Darstellungen und Berechnungen basieren.

Die Aufnahmen aus den beiden Kamerapositionen erfolgen mittels einfacher Instruktionen aus freier Hand oder, zur Vermeidung von Bewegungsunschärfen, vom Stativ. Jeder Punkt der zu vermessenden Oberfläche wird dabei aus mindestens zwei (gegebenenfalls auch mehr als zwei) Kamerapositionen erfasst. In einigen der Aufnahmen müssen die Passpunkte sichtbar sein, die z.B. mittels Theodolit eingemessen werden und zum Einpassen der generierten 3D-Rekonstruktion in das übergeordnete Koordinatensystem dienen.

Die photogrammetrische Auswertung kann anhand der nachfolgenden Schritte erfolgen:
(a) Zur Auswertung werden für jede Aufnahme diejenigen "Nachbar"-Aufnahmen gesucht, die gemeinsame Teile der Oberfläche abdecken (d.h. Nachbar-Aufnahmen, mit denen jede Aufnahme ein Stereo - Aufnahmenpaar beschreibt). Das erfolgt mittels robuster "Features", also Aufnahmenmerkmalen, die auf benachbarten Aufnahmen automatisch als idente Objektpunkte identifiziert werden können. Typischerweise werden hundert solcher korrespondierender Oberflächenpunkte auf jeder Aufnahme gefunden. Durch Kenntnis der perspektiven Geometrie der Kamera und geometrischer Einschränkungen (Epipolargeometrie) können allfällige Ausreißer ausgefiltert werden. Ergebnis dieser Schritte ist ein Set von etwa 1000 Oberflächen - Punkten, deren Bildkoordinaten in jeweils zwei oder mehr Aufnahmen bekannt sind.
(b) Der unter (a) erhaltene Datensatz von Oberflächen - Punkten kann in ein Ausgleichsverfahren eingespeist werden, in dem simultan dreidimensionale Koordinaten der o. a. etwa 1000 Punkte ermittelt werden, als auch die Kamerapositionen und Aufnahmerichtungen. Dieser Schritt wird "Bündelblock-Ausgleich" genannt, da Kamerazentren, 2D (im Bild) und 3D Koordinaten der Punkte in Strahlenbündeln verwoben sind, die mit der perspektiven Abbildung jeder einzelnen Kamera beschrieben werden. Als Ergebnis liegen die Kamerapositionen, ihre Aufnahmerichtungen sowie die 3D Koordinaten der o. g. Objektpunkte in einem willkürlichen Koordinatensystem in willkürlicher Skalierung vor. Die Ergebnisse müssen also noch in das übergeordnete Koordinatensystem gebracht werden.
(c) Die Identifikation der Passpunkte erfolgt unter Kenntnis ihrer Form (bevorzugt kreisförmig), Helligkeit (heller zusammenhängender Bereich), und Größe mittels Bildverarbeitung. Zur Identifikation der Passpunkte in mehreren Aufnahmen und Ausscheidung von Ausreißern werden dieselben Verfahren wie in Punkt (a) verwendet.
(d) Die Zuordnung der identifizierten Passpunkte zu den korrekten Indizes erfolgt, ähnlich wie bei der automatischen Orientierung von Laserscans, mittels Vergleichs ihrer Distanzen (bzw. Vergleichs verschiedener kongruenter Dreiecke im 3D - Raum, die zwischen verschiedenen Kombinationen von Passpunkten aufgespannt werden).
(e) Unter Einbeziehung der eindeutig identifizierten Passpunkte (deren 3D-Koordinaten im übergeordneten Koordinatensystem und 2D-Koordinaten in den Aufnahmen in denen sie vorkommen nunmehr fix und bekannt sind) wird nun der Bündelblock - Ausgleich nochmals gestartet, was zur Bestimmung der Kamerapositionen und -richtungen nunmehr im übergeordneten Koordinatensystem führt.
(f) Die unter (a) erhaltenen korrespondierenden Punkte werden als Initial-Menge für ein dichtes Matching - Verfahren zwischen benachbarten Aufnahmen verwendet. Für jeden Bildpunkt in jedem Bild (d.h. für mehrere Millionen Bildpunkte) liegen danach die Koordinaten der korrespondierenden Bildpunkte (d.h. vom gleichen Objektpunkt stammend) in den jeweiligen Nachbarn fest.
(g) Die dichten Matching-Ergebnisse werden unter Verwendung der Kamerapositionen und - richtungen mittels Vorwärtsschnitt (aus Kenntnis der Stereo - Geometrie für jedes Bildpaar) zur Ermittlung einer 3D Punktwolke für jedes Stereo - Bildpaar herangezogen.
(h) Die 3D-Punktwolke wird zusammen mit den RGB - Werten aus den jeweiligen Aufnahmen, aus denen sie ermittelt wurden, auf die Tunnelgeometrie projiziert. Dabei haben Bereiche in der Mitte der Originalaufnahmen höhere Priorität. Fließende Gewichte stellen sicher, dass die Übergänge zwischen den Eingangsaufnahmen unsichtbar werden.

## Patentansprüche

1. Verfahren zur Ermittlung der Oberflächengeometrie einer Tunneloberfläche (3), **dadurch gekennzeichnet, dass**
a) zunächst im zu ermittelnden Bereich der Tunneloberfläche (3) wenigstens drei Passpunkte (6) angebracht werden,
b) anschließend aus einer ersten Kameraposition (1) zumindest eine Aufnahme (10.1, 11.1, 12.1, 13.1, 14.1) von zumindest einem Abschnitt der Wölbung gemacht wird, wobei die wenigstens drei Passpunkte (6) von der wenigstens einen Aufnahmen (10.1, 11.1, 12.1, 13.1, 14.1) erfasst werden,
c) danach aus einer zweiten Kameraposition (2), die von der ersten Kameraposition (1) beabstandet ist, zumindest eine Aufnahme (10.2, 11.2, 12.2, 13.2, 14.2) von dem zumindest einen Abschnitt der Wölbung gemacht wird, von dem bereits aus der ersten Kameraposition eine Aufnahme (10.1, 11.1, 12.1, 13.1, 14.1) gemacht wurde, wobei die wenigstens drei Passpunkte (6) von der wenigstens einen Aufnahme (10.2, 11.2, 12.2, 13.2, 14.2) aus der zweiten Kameraposition (2) erfasst werden,
d) abschließend eine photogrammetrische Auswertung der Aufnahmen (10.1, 11.1, 12.1, 13.1, 14.1; 10.2, 11.2, 12.2, 13.2, 14.2) vorgenommen und die Oberflächengeometrie bestimmt wird, wobei nach der Anbringung der Passpunkte (6) - aber vor der Auswertung - die Passpunkte (6) geodätisch vermessen werden.

2. Verfahren nach Anspruch 1, **dadurch gekennzeichnet, dass** die photogrammetrische Auswertung einen Bündelblockausgleich umfasst.

3. Verfahren nach Anspruch 1 oder Anspruch 2, **dadurch gekennzeichnet, dass** aus der ersten Kameraposition (1) jeweils mindestens eine Aufnahme (10.1, 11.1, 12.1, 13.1, 14.1) von zumindest zwei Abschnitten der Wölbung gemacht werden, wobei die Aufnahmen (10.1, 11.1, 12.1, 13.1, 14.1) teilweise überlappen, und dass aus der zweiten Kameraposition (2) jeweils mindestens eine Aufnahme (10.2, 11.2, 12.2, 13.2, 14.2) von zumindest zwei Abschnitten der Wölbung gemacht werden, von denen bereits aus der ersten Kameraposition (1) Aufnahmen (10.1, 11.1, 12.1, 13.1, 14.1) gemacht wurden, wobei die Aufnahmen (10.2, 11.2, 12.2, 13.2, 14.2) teilweise überlappen.

4. Verfahren nach Anspruch 3, **dadurch gekennzeichnet, dass** aus der ersten Kameraposition (1) und aus der zweiten Kameraposition (2) jeweils mindestens eine Aufnahme (10.1, 11.1, 12.1, 13.1, 14.1; 10.2, 11.2, 12.2, 13.2, 14.2) von zumindest vier, vorzugsweise fünf, Abschnitten der Wölbung gemacht werden.

5. Verfahren nach einem der Ansprüche 1 bis 4, **dadurch gekennzeichnet, dass** die erste Kameraposition (1) im Wesentlichen unterhalb des Firsts (F) der Wölbung gewählt wird.

6. Verfahren nach Anspruch 5, **dadurch gekennzeichnet, dass** die zweite Kameraposition (2) im Wesentlichen unterhalb des Firsts (F) der Wölbung gewählt wird.

7. Verfahren nach einem der Ansprüche 1 bis 6, **dadurch gekennzeichnet, dass** die Aufnahmen (10.1, 11.1, 12.1, 13.1, 14.1) aus der ersten Kameraposition (1) entlang der Tunnellaibung aufgenommen werden.

8. Verfahren nach einem der Ansprüche 1 bis 7, **dadurch gekennzeichnet, dass** die Aufnahmen (10.2, 11.2, 12.2, 13.2, 14.2) aus der zweiten Kameraposition (2) entlang der Tunnellaibung aufgenommen werden.

9. Verfahren nach einem der Ansprüche 1 bis 8, **dadurch gekennzeichnet, dass** zumindest vier, vorzugsweise fünf, Aufnahmen (10.1, 11.1, 12.1, 13.1, 14.1; 10.2, 11.2, 12.2, 13.2, 14.2) pro Kameraposition (1, 2) aufgenommen werden.

10. Verfahren nach einem der Ansprüche 1 bis 9, **dadurch gekennzeichnet, dass** die Aufnahmen (10.1, 11.1, 12.1, 13.1, 14.1; 10.2, 11.2, 12.2, 13.2, 14.2) entlang einer Drehachse aufgenommen werden, wobei die Überlappung (15) pro Aufnahme (10.1, 11.1, 12.1, 13.1, 14.1; 10.2, 11.2, 12.2, 13.2, 14.2) zumindest 15° beträgt.

11. Verfahren nach einem der Ansprüche 1 bis 10, **dadurch gekennzeichnet, dass** insgesamt vier Passpunkte (6) vorgesehen sind, wobei die Passpunkte in mindestens einer Aufnahme (10.1, 11.1, 12.1, 13.1, 14.1; 10.2, 11.2, 12.2, 13.2, 14.2) pro Kameraposition (1, 2) erfasst werden.
